Europäisches Patentamt

European Patent Office

Office européen des brevets

(19)

(11)     **EP 1 152 933 B1**

(12)     **EUROPÄISCHE PATENTSCHRIFT**

(45) Veröffentlichungstag und Bekanntmachung des Hinweises auf die Patenterteilung:
**07.04.2004   Patentblatt 2004/15**

(21) Anmeldenummer: **00901130.5**

(22) Anmeldetag: **25.01.2000**

(51) Int Cl.⁷: **B60T 8/00**, B60T 8/88

(86) Internationale Anmeldenummer:
**PCT/EP2000/000537**

(87) Internationale Veröffentlichungsnummer:
**WO 2000/048882 (24.08.2000 Gazette 2000/34)**

(54) **VERFAHREN UND VORRICHTUNG ZUR ÜBERWACHUNG EINER MEHRZAHL VON EINEN PROZESS ERFASSENDEN SENSOREN, INSBESONDERE FÜR EIN ESP-SYSTEM FÜR FAHRZEUGE**

METHOD AND DEVICE FOR MONITORING A PLURALITY OF SENSORS DETECTING A PROCESS, NOTABLY FOR AN ESP SYSTEM FOR VEHICLES

PROCEDE ET DISPOSITIF POUR LA SURVEILLANCE DE PLUSIEURS CAPTEURS DETECTANT UN PROCESSUS, EN PARTICULIER POUR UN SYSTEME DE PROGRAMME ELECTRONIQUE DE STABILITE POUR VEHICULES

(84) Benannte Vertragsstaaten:
**DE FR**

(30) Priorität: **18.02.1999  DE 19906795**
             **03.08.1999  DE 19936434**

(43) Veröffentlichungstag der Anmeldung:
**14.11.2001   Patentblatt 2001/46**

(73) Patentinhaber: **Continental Teves AG & Co. OHG**
**60488 Frankfurt am Main (DE)**

(72) Erfinder: **DING, Eve, Limin**
**D-01968 Senftenberg (DE)**

(56) Entgegenhaltungen:
**EP-A- 0 716 000          DE-A- 19 636 443**
**DE-A- 19 708 508          DE-A- 19 749 058**

**Beschreibung**

Die Erfindung betrifft ein Verfahren und eine Vorrichtung zur Überwachung einer Mehrzahl von einen Prozeß erfassenden Sensoren, wobei der Prozeß insbesondere ein elektronisches Stabilitätsprogramm (ESP) für Fahrzeuge sein kann.

Elektronische Stabilitätsprogramme dieser Art sind fahrdynamische Regelsysteme für Fahrzeuge, die dazu dienen, den Fahrer in kritischen Fahrsituationen während des Bremsens, Beschleunigens und Lenkens zu unterstützen und dort einzugreifen, wo der Fahrer selbst keine direkte Eingriffsmöglichkeit hat. Das Regelsystem unterstützt den Fahrer beim Bremsen, insbesondere auf einer Fahrbahn mit niedrigem oder wechselndem Reibwert, auf der das Fahrzeug wegen blockierender Räder nicht mehr steuerbar sein oder ins Schleudern geraten kann, ferner beim Beschleunigen, bei dem die Gefahr des Durchdrehens der Antriebsräder besteht, sowie schließlich beim Lenken in einer Kurve, in der das Fahrzeug über- oder untersteuern könnte. Insgesamt wird damit nicht nur der Komfort, sondern auch die aktive Sicherheit wesentlich verbessert.

Einem solchen Regelsystem liegt ein geschlossener Regelkreis zugrunde, der im Normalbetrieb des Fahrzeugs typische Regelaufgaben übernimmt und in extremen Fahrsituationen das Fahrzeug so schnell wie möglich abfangen soll. Als Istwertgeber sind dabei Sensoren zur Erfassung der verschiedenen fahrdynamischen Parameter von besonderer Bedeutung. Eine plausible Regelung setzt voraus, daß die Sensoren den Istzustand der Regelstrecke korrekt wiedergeben. Dies ist bei Fahrstabilitätsregelungen in extremen Fahrsituationen, in denen eine Regelabweichung schon innerhalb einer sehr kurzen Zeit ausgeregelt werden muß, besonders wichtig. Aus diesem Grunde müssen bei einem elektronischen Stabilitätsprogramm die ESP-Sensoren (Gierratensensor, Querbeschleunigungssensor, Lenkwinkelsensor) ständig überwacht werden, um Fehler in den Sensoren frühzeitig erkennen zu können, damit eine Fehlregelung, die das Fahrzeug in einen sicherheitskritischen Zustand bringen könnte, ausgeschlossen wird.

ESP-Sensoren können z.B. sogenannte Klemmfehler aufweisen. Diese Fehler verursachen Fehlfunktionen, die dazu führen, daß die Sensoren ständig konstante Werte in ihrem Nutzbereich anzeigen, so daß die Fahrdynamik nicht korrekt wiedergegeben werden kann. In bestimmten Fahrsituationen mit geringer Dynamik ist nicht auszuschließen, daß ein solcher Klemmfehler unentdeckt bleibt.

Aus der DE-A-19 749 058 ist es bekannt, zeitliche Änderungen der Sensorausgangssignale zu erfassen, gleichartige Vergleichsgrößen auf ihre Plausibilität hin zu vergleichen und hieraus die Fehlerhaftigkeit eines überwachten Sensors anzuzeigen.

Der Erfindung liegt deshalb die Aufgabe zugrunde, ein Verfahren und eine Vorrichtung zur Überwachung einer Mehrzahl von einen Prozeß, wie zum Beispiel ein elektronisches Stabilitätsprogramm (ESP) für Fahrzeuge erfassenden Sensoren zu schaffen, mit dem/der die Gefahr einer Fehlmessung aufgrund von Klemmfehlern der Sensoren wesentlich vermindert ist.

Gelöst wird diese Aufgabe gemäß Anspruch 1 mit einem Verfahren der eingangsgenannten Art, das sich durch folgende Schritte auszeichnet: Erfassen von zeitlichen Änderungen der Ausgangssignale der Sensoren, Vergleichen und Prüfen der Änderungen im Hinblick auf ihre Plausibilität, die durch die durch den Prozeß gegebenen Abhängigkeiten der Sensorausgangssignale bestimmt wird und Erzeugen einer Fehlermeldung, wenn die Plausibilität nicht gegeben ist.

Die Aufgabe wird ferner mit einer Vorrichtung gemäß Anspruch 7 gelöst, die eine Klemmfehler-Erkennung mit einer ersten Einrichtung zum Erfassen von zeitlichen Änderungen der Ausgangssignale der Sensoren und einer zweiten Einrichtung zum Vergleichen und Prüfen der Änderungen im Hinblick auf ihre Plausibilität, die durch die durch den Prozeß gegebenen Abhängigkeiten der Sensorausgangssignale bestimmt wird, sowie zum Erzeugen einer Fehlermeldung, wenn die Plausibilität nicht gegeben ist, aufweist.

Besonders vorteilhaft ist die Erfindung mit einem ESP-System für Fahrzeuge kombinierbar, das durch eine Mikroprozessoreinheit gesteuert wird, wobei der Prozeß das elektronische Fahrstabilitätsprogramm und die Sensoren ein Gierratensensor, ein Querbeschleunigungssensor und ein Lenkwinkelsensor sind und die erste und zweite Einrichtung durch ein Unterprogramm in der Mikroprozessoreinheit implementiert ist.

Die Erfindung ist insbesondere zur Kombination mit einer modellgestützten Überwachung der Sensoren eines elektronischen Stabilitätsprogramms (ESP) für Fahrzeuge geeignet, die in der parallelen Anmeldung 199 29 155.1 beschrieben wird und hiermit durch Bezugname zum Bestandteil dieser Offenbarung gemacht werden soll. Bei jenem System wird jeweils einer der Sensoren dadurch überwacht, daß sein Ausgangssignal mit analytischen Referenzwerten (Redundanzen) verglichen wird, die mit Hilfe eines Mehrfachprozeßmodells aus aktuell nicht zu überwachenden Prozeßführungs- oder Prozeßmeßgrößen ermittelt werden. Auch bei diesem System ist es jedoch nicht ganz auszuschließen, daß die eingangs erläuterten Klemmfehler unentdeckt bleiben. Für diese Fälle bietet die Erfindung Abhilfe.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung. Es zeigt:

Fig. 1 ein schematisches Blockschaltbild einer erfindungsgemäßen Vorrichtung;

Fig. 2a bis 2d verschiedene Signalverläufe für einen ersten Fahrzustand und

Fig. 3a bis 3d verschiedene Signalverläufe für einen zweiten Fahrzustand.

Ein wesentliches Prinzip des Überwachungsverfahrens besteht darin, zur Entdeckung der Klemmfehler eine Plausibilitätsprüfung auf der Basis der physikalischen Zusammenhänge der Ausgangssignale der verschiedenen, einen Prozeß erfassenden Sensoren unter Einbeziehung einer Merkmalsanalyse der Sensorsignale bei einem Klemmfehler durchzuführen. Die Überwachung kann zyklisch mit vorbestimmten Zeitabständen erfolgen.

Untersuchungen haben ergeben, daß im Falle eines Klemmfehlers die ESP-Sensoren unabhängig von Fahrmanövern Ausgangssignale erzeugen, die ausschließlich hardware-bedingte stochastische Signale wie Meßrauschen wiedergeben. Aus diesem Grund ist davon auszugehen, daß die Ausgangssignale nach einer Tiefpaß-Filterung quasi konstant verlaufen. Eine Prüfung der Änderung der Sensorsignale ermöglicht somit eine wirksame Merkmalsanalyse, mit der Klemmfehler erkannt werden können.

Die Plausibilitätsprüfung beruht auf folgenden Erkenntnissen: Wenn ein Fahrzeug die normalen Fahrmanöver fährt, worunter zum Beispiel eine stationäre Geradeausfahrt, eine stationäre Kreisfahrt und die üblichen Wechselmanöver verstanden werden sollen, läßt sich der Zusammenhang zwischen den Ausgangssignalen der drei ESP-Sensoren (Gierratensensor, Lenkwinkelsensor, Querbeschleunigungssensor) im fehlerfreien Fall wie folgt beschreiben:

$$\dot{\psi} = \frac{\delta_{l\cdot}}{i_{l\cdot}l} \; \frac{v_{ref}}{(1 + (\frac{v_{ref}}{v_{ch}})^2)} \qquad \text{und} \qquad a_q = v_{ref}\dot{\psi} \qquad \text{(G1.1)}$$

wobei:

$v_{ref}$     Fahrzeugreferenzgeschwindigkeit;

$\dot{\psi}$     Gierrate;

$a_q$     Querbeschleunigung;

$\delta_L$     Lenkradwinkel;

$i_L$     Lenkübersetzung;

$l$     Radstand;

$v_{ch}$     charakteristische Fahrgeschwindigkeit.

Diese Gleichungen können in vereinfachter Form wie folgt dargestellt werden:

$$y_1 = k_1{}^*y_2 \text{ und } y_3 = k_2{}^*y_1$$

wobei $k_1$ und $k_2$ zwei von einer Fahrzeugreferenzgeschwindigkeit abhängige Konstanten und $y_1$, $y_2$ und $y_3$ die Gierrate, den Lenkradwinkel bzw. die Querbeschleunigung bezeichnen.

Bei einer konstanten Fahrzeugreferenzgeschwindigkeit ergibt sich dann:

$$\Delta y_1 = k_1{}^*\Delta y_2 \text{ und } \Delta y_3 = k_2{}^*\Delta y_1$$

Dabei bezeichnen $\Delta y_1$, $\Delta y_2$ und $\Delta y_3$ Änderungen der Sensorsignale, die wie oben bereits erläutert wurde, eine wichtige Rolle bei der Merkmalsanalyse und somit der Klemmfehlererkennung spielen.

Weiterhin ist davon auszugehen, daß im praktischen Betrieb Klemmfehler niemals gleichzeitig bei mehr als einem ESP-Sensor auftreten. Für die Fehlererkennung kann also angenommen werden, daß zu einem Zeitpunkt immer nur einer von den drei ESP-Sensoren einen Klemmfehler aufweist. Dies kann die Zuverlässigkeit der Fehlererkennung erheblich verbessern. Auf dieser Grundlage kann man die nachfolgend beschriebene Plausibilitätsprüfung zur Erkennung eines Klemmfehlers anwenden:

Von einem fehlerfreien Betrieb ist auszugehen, wenn folgende Bedingungen gelten:

$$\Delta y_i \neq 0 \text{ für } i = 1, 2, 3 \text{ oder } \Delta y_i = 0 \text{ für } i = 1, 2, 3$$

Wenn hingegen eine der Änderungen der Sensorausgangssignale gleich Null und die anderen Änderungen ungleich Null sind, so ist von einem Fehler auszugehen:

$$\exists \, j \in \{1,2,3\}, \, \Delta y_j = 0 \qquad \text{und} \qquad \Delta y_i \neq 0, \qquad \forall \, i \neq j$$

wobei i, j jeweils die Sensoren bezeichnen. Für eine praktische Realisierung dieser Grundsätze sind zwei Tatsachen zu berücksichtigen: einerseits kann der Zusammenhang zwischen den drei ESP-Sensoren bei Wechselmanövern wegen der Phasenverschiebung der Sensorsignale untereinander nur mit einer gewissen Umgenauigkeit wiedergegeben werden, andererseits können die Sensorsignale, wie oben erwähnt wurde, auf Grund des Rauschens nicht absolut konstant bleiben.

Dies erfordert eine praktische Umsetzung der oben vorgestellten Plausibilitätsprüfung, die auf der einen Seite eine hohe Robustheit gegenüber den genannten Ungenauigkeiten aufweist und auf der anderen Seite den Anforderungen an die Empfindlichkeit für den Klemmfehler genügt. Um dieses Ziel zu erreichen, haben sich zwei Maßnahmen als vorteilhaft erwiesen:

Einerseits werden zur Bewertung der Änderungen der Sensorsignale nicht die zeitlichen Veränderungen herangezogen, sondern es wird der absolute Wert der zeitlichen Ableitung der Sensor-Ausgangssignale über einen Zeitraum $t \in [t_1, t_2]$ integriert, und zwar gemäß folgender Formel:

$$\Delta y_i = \int_{t_1}^{t_2} \left| \frac{dy_i(t)}{dt} \right| d\tau$$

für $i = 1,2,3$

Andererseits werden Schwellwerte eingeführt. Für jeden Sensor werden dabei zwei Überwachungsschwellen definiert, und zwar

-- eine Niederschwelle $S_L$: wenn $\Delta y_i < S_{Li}$ ist, so bedeutet dies, daß die Änderung von $y_i$ vernachlässigbar ist und somit $y_i$ als konstant angesehen werden kann, sowie

-- eine Hochschwelle $S_H$: wenn $\Delta y_i > S_{Hi}$ ist, so bedeutet dies, daß der Sensor von einer entsprechenden Meßgröße beaufschlagt wird, das heißt, daß zum Beispiel im Falle des Querbeschleunigungssensors eine zeitvariable Querdynamik (Wechselmanöver) vorliegt.

Um eine hohe Empfindlichkeit für einen möglichen Klemmfehler zu erzielen, sollten beide Schwellwerte möglichst niedrig gehalten werden.

Auf der Basis dieser beiden Maßnahmen kann während einer Fahrt eine Überwachung der Sensoren nach folgenden Kriterien stattfinden: von einem fehlerfreien Betrieb ist auszugehen, wenn gilt:

$$\Delta y_i > S_{H_i} \, \forall \, i \in \{1,2,3\} \qquad \text{oder } \Delta y_i < S_{L_i} \qquad \forall \, i \in \{1,2,3\}$$

Andererseits ist ein Fehler eines Sensors anzunehmen, wenn gilt:

$$\exists \, j \in \{1,2,3\}, \, \Delta y_i < S_{L_i} \qquad \text{und} \qquad \Delta y_i > S_{H_i}, \, \forall \, i \neq j$$

Hierbei gilt die Einschränkung, daß ein Klemmfehler eines Sensors zu einem Zeitpunkt, zu dem die anderen Sensor-Ausgangssignale konstant sind, möglicherweise nicht entdeckt werden kann.

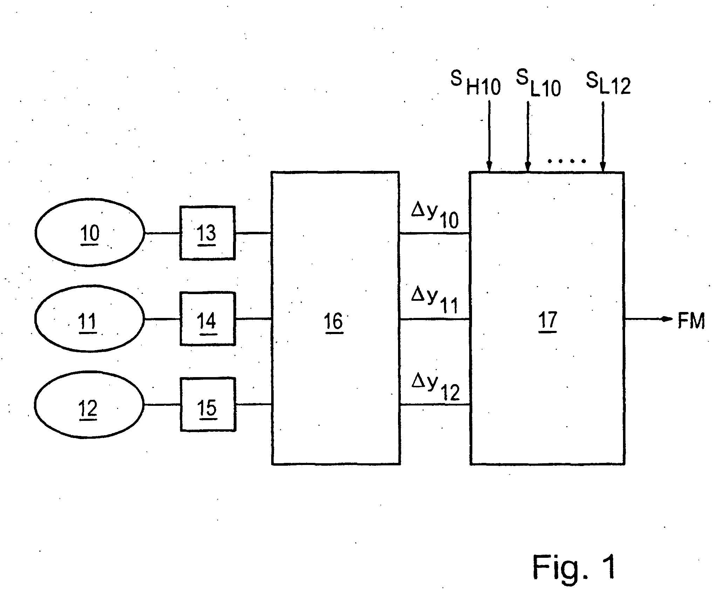

Figur 1 zeigt ein schematisches Blockschaltbild einer entsprechenden Schaltung, die im wesentlichen auch mit einem Programm realisiert werden kann. Die Ausgangssignale der drei ESP-Sensoren 10, 11, 12 (Querbeschleunigungssensor, Lenkwinkelsensor und Gierratensensor) werden jeweils einem Tiefpaß 13, 14, 15 zugeführt, dessen Ausgangssignale zur Ermittlung der zeitlichen Änderungen an einer ersten Einrichtung 16 anliegen. Diese weist einen jedem Sensor zugeordneten Differenzierer zur zeitlichen Ableitung der Ausgangssignale der Sensoren sowie einen Integrierer zur Integration des Betrages der zeitlichen Ableitung der Ausgangssignale auf. Die damit ermittelten Änderungen $\Delta y_i$ werden einer zweiten Einrichtung 17 zugeführt, mit der diese mit den Schwellwerten $S_{Hi}$, $S_{Li}$ verglichen und einer Plausibiltätsprüfung unterzogen werden, und die gegebenenfalls ein Fehlersignal FM erzeugt.

Zur Ermittlung der Änderungen $\Delta y_i$ der Sensorsignale wird die oben dargestellte zeitliche Ableitung und die Integralbildung in eine zeitdiskrete Form transformiert, bei der die Ableitung durch den Betrag der Differenz zwischen zwei Meßwerten während einer Abtastzeit und die Integralbildung durch eine Summierung während eines Überwachungsfensters ersetzt werden. Bezeichnet man die Abtastzeit mit $\Delta t$, den Meßwert $y_i(t)$ zum Zeitpunkt $t = k\Delta t$ mit $y_i(k) = y_i(k\Delta t)$, $i = 1, 2, 3$ und das Überwachungsfenster mit $[k_1\Delta t, k_2\Delta t]$, dann erhält man:

$$\Delta y_i = \sum_{k_1}^{k_2} \left| \frac{y_i(k+1) - y_i(k)}{\Delta t} \right|$$

für $i = 1,2,3$

Dieser Überwachungsmechanismus läßt sich programmgesteuert durchführen, indem eine Mikroprozessoreinheit 16 entsprechend programmiert wird.

Die ermittelten Änderungen der Sensorsignale werden dann in jeweils einer Vergleichs- und Auswerteeinrichtung 17 für jedes Sensorsignal mit den jeweiligen Überwachungsschwellen $S_{Li}$, $S_{Hi}$ für jeden Sensor i verglichen. Wenn sich durch die oben beschriebene Plausibilitätsprüfung ergibt, daß eine der Abweichungen Null ist, während alle anderen Abweichungen ungleich Null sind, so wird eine Fehlermeldung FM erzeugt.

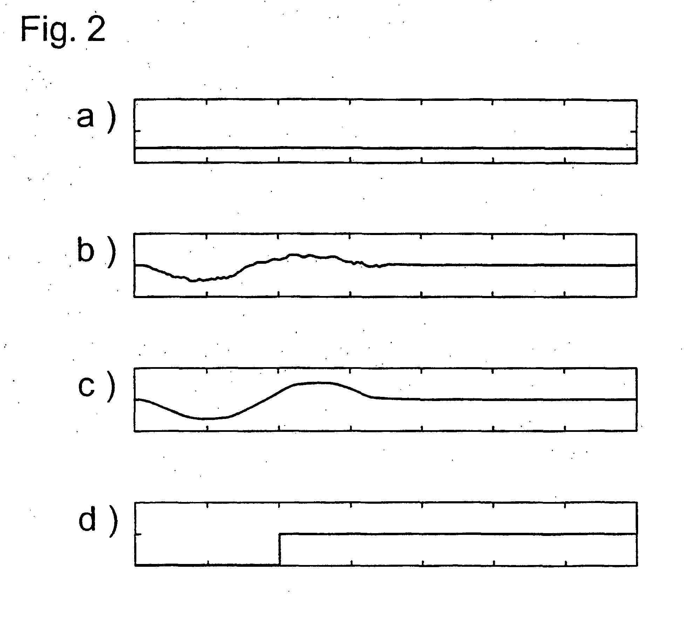

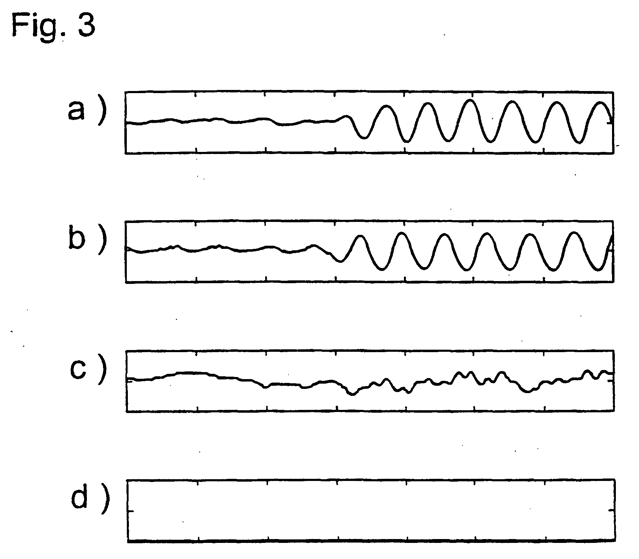

In den Figuren 2 und 3 sind zwei Beispiele für verschiedene zeitliche verläufe der Sensorausgangssignale und des Fehlersignals dargestellt.

Figur 2a zeigt das Ausgangssignal des Gierratensensors, Figur 2b das Ausgangssignal des Querbeschleunigungssensors, Figur 2c das Ausgangssignal des Lenkwinkelsensors und Figur 2d eine Fehlermeldung.

Aus den Verläufen der Ausgangssignale des Querbeschleunigungssensors und des Lenkwinkelsensors läßt sich schließen, daß der Fahrer ein Wechselmanöver fährt. Da innerhalb einer Abtastzeit von zum Beispiel 2 Sekunden die Änderung des Ausgangssignals des Gierratensensors kleiner bleibt als seine Niederschwelle, die Änderungen der Signale des Querbeschleunigungs- und Lenkwinkelsensors jedoch größer als ihre Hochschwellen sind, ist ein Klemmfehler des Gierratensensors anzunehmen und die Fehlermeldung wird erzeugt.

Die Figuren 3a bis 3c zeigen jeweils die Ausgangssignale der gleichen Sensoren wie in den Figuren 2a bis 2c, wobei sich in diesem Fall das Fahrzeug in Geradeausfahrt auf einer schlechten Wegstrecke befindet. Die Änderungen aller drei ESP-Sensoren sind gleichzeitig größer als ihre Niederschwellen. Aus diesem Grund wird mit dem Überwachungsmechanismus davon ausgegangen, daß keiner der Sensoren einen Klemmfehler aufweist, und eine Fehlermeldung (Figur 3d) wird nicht erzeugt.

**Patentansprüche**

**1.** Verfahren zur Überwachung einer Mehrzahl von einen Prozess erfassenden Sensoren, wobei zeitliche Änderungen der Ausgangssignale der Sensoren erfasst werden, **gekennzeichnet durch** die Schritte:

Vergleichen und Prüfen der Änderungen im Hinblick auf ihre Plausibilität, die **durch** die **durch** den Prozeß gegebenen Abhängigkeiten der Sensorausgangssignale gegeben ist, wenn die Änderungen der Ausgangssignale der Sensoren entweder alle ungleich Null oder alle gleich Null sind und

Erzeugen einer Fehlermeldung, wenn die Plausibilität nicht gegeben ist.

**2.** Verfahren nach Anspruch 1,
**dadurch gekennzeichnet, daß** der Prozeß ein elektronisches Fahrstabilitätsprogramm (ESP) für Fahrzeuge ist und die Sensoren ein Gierratensensor, ein Querbeschleunigungssensor und ein Lenkwinkelsensor sind.

**3.** Verfahren nach einem der vorhergehenden Ansprüche,

**dadurch gekennzeichnet, daß** die Änderungen der Ausgangssignale der Sensoren jeweils durch Integration des absoluten Wertes der zeitlichen Ableitung der Ausgangssignale über einen vorgebbaren Zeitraum ermittelt werden.

4. Verfahren nach Anspruch 3,
**dadurch gekennzeichnet, daß** die zeitliche Ableitung in zeitdiskreter Form durch Differenzbildungen zwischen zwei Ausgangssignalen während einer Abtastzeit und die Integration durch Summenbildung während eines Überwachungsfensters durchgeführt wird.

5. Verfahren nach einem der Ansprüche 1 bis 4,
**dadurch gekennzeichnet, daß** die Änderungen der Sensorsignale mit einem ersten niedrigen Schwellwert (Niederschwelle) und einem zweiten höheren Schwellwert (Hochschwelle) verglichen werden.

6. Vorrichtung zur Durchführung des Verfahrens nach einem der vorhergehenden Ansprüche, mit mindestens einer ersten Einrichtung (16) zum Erfassen von zeitlichen Änderungen der Ausgangssignale der Sensoren
**gekennzeichnet durch** eine zweite Einrichtung (17) zum Vergleichen und Prüfen der Änderungen im Hinblick auf ihre Plausibilität, die **durch** die **durch** den Prozess gegebenen. Abhängigkeiten der Sensorausgangssignale gegeben ist, wenn die Änderungen der Ausgangssignale der Sensoren entweder alle ungleich Null oder alle gleich Null sind sowie zum Erzeugen einer Fehlermeldung, wenn die Plausibilität nicht gegeben ist.

7. Vorrichtung nach Anspruch 6,
**dadurch gekennzeichnet, daß** die erste Einrichtung (16) einen jedem Sensor zugeordneten Differenzierer zur zeitlichen Ableitung der Ausgangssignale der Sensoren sowie einen Integrierer zur Integration des Betrages der zeitlichen Ableitung der Ausgangssignale aufweist.

8. Vorrichtung nach Anspruch 6 oder 7,
**dadurch gekennzeichnet, daß** jedem Sensor (10, 11, 12) ein Tiefpaß (13, 14, 15) zugeordnet ist, mit dem die Sensor-Ausgangssignale gefiltert und anschließend der ersten Einrichtung (16) zugeführt werden.

9. ESP-System für Fahrzeuge, das durch eine Mikroprozessoreinheit gesteuert wird,
**gekennzeichnet durch** eine Vorrichtung nach einem der Ansprüche 6 bis 8, wobei der Prozeß das elektronische Fahrstabilitätsprogramm und die Sensoren ein Gierratensensor, ein Querbeschleunigungssensor und ein Lenkwinkelsensor sind und die erste und zweite Einrichtung **durch** ein Unterprogramm in der Mikroprozessoreinheit implementiert ist.

**Claims**

1. Method of monitoring a plurality of sensors detecting a process, wherein time variations of the output signals of the sensors are detected,
**characterized by** the following steps:

   comparing and testing the variations in view of their plausibility which is determined by the dependencies of the sensor output signals given by the process when the variations of the output signals of the sensors either are all unequal to zero or all equal to zero, and

   producing an error message in the absence of plausibility.

2. Method as claimed in claim 1,
**characterized in that** the process is an electronic driving stability program (ESP) for vehicles, and the sensors comprise a yaw rate sensor, a transverse acceleration sensor, and a steering angle sensor.

3. Method as claimed in any one of the preceding claims,
**characterized in that** the variations of the output signals of the sensors are respectively determined by integration of the absolute value of the time derivative of the output signals for a predeterminable period of time.

4. Method as claimed in claim 3,
**characterized in that** the time derivative is achieved in a time-discrete form by differentiations between two output signals during a sampling time, and the integration is performed by summation during a monitoring window.

**5.** Method as claimed in any one of claims 1 to 4,
**characterized in that** the variations of the sensor signals are compared with a first low threshold value (low threshold) and a second higher threshold value (high threshold).

**6.** Device for implementing the method as claimed in any one of the preceding claims, including at least one first device (16) for detecting time variations of the output signals of the sensors,
**characterized by** a second device (17) for comparing and testing the variations in view of their plausibility which is determined by the dependencies of the sensor output signals given by the process when the variations of the output signals of the sensors either are all unequal to zero or all equal to zero, and for producing an error message in the absence of plausibility.

**7.** Device as claimed in claim 6,
**characterized in that** the first device (16) includes a differentiator associated with each sensor for the time derivative of the output signals of the sensors and an integrator for the integration of the quantity of the time derivative of the output signals.

**8.** Device as claimed in claim 6 or 7,
**characterized in that** associated with each sensor (10, 11, 12) is a low-pass filter (13, 14, 15) by which the sensor output signals are filtered and subsequently sent to the first device (16).

**9.** ESP system for vehicles, which is controlled by a microprocessor unit,
**characterized by** a device as claimed in any one of claims 6 to 8, wherein the process is the electronic driving stability program, and the sensors comprise a yaw rate sensor, a transverse acceleration sensor, and a steering angle sensor, and the first and second device is implemented by a subprogram in the microprocessor unit.

**Revendications**

**1.** Procédé de contrôle d'une pluralité de capteurs détectant un processus, des variations temporelles des signaux de sortie des capteurs étant détectés, **caractérisé par** les étapes suivantes :

comparaison et vérification des variations quant à leur plausibilité, qui est respectée par les dépendances des signaux de sortie des capteurs déterminées par le processus, lorsque les variations des signaux de sortie des capteurs sont toutes différentes de zéro ou toutes égales à zéro, et

génération d'un message de défaut en l'absence de plausibilité.

**2.** Procédé selon la revendication 1,
**caractérisé en ce que** le processus est un programme électronique de stabilité de conduite (ESP) pour véhicule et les capteurs sont un capteur d'embardée, un capteur d'accélération transversale et un capteur d'angle de braquage.

**3.** Procédé selon l'une des revendications précédentes,
**caractérisé en ce que** les variations des signaux de sortie des capteurs sont déterminées chacune par intégration de la valeur absolue de la dérivée dans le temps des signaux de sortie, pendant un laps de temps qui peut être prédéfini.

**4.** Procédé selon la revendication 3,
**caractérisé en ce que** la dérivée dans le temps sous forme discrète en temps est exécutée par formation des différences entre deux signaux de sortie pendant un temps de détection et l'intégration par formation des sommes pendant une fenêtre de contrôle.

**5.** Procédé selon l'une des revendications 1 à 4,
**caractérisé en ce que** les variations des signaux des capteurs sont comparées à une première valeur seuil basse (seuil bas) et à une deuxième valeur seuil plus élevée (seuil haut).

**6.** Dispositif pour la mise en oeuvre du procédé selon l'une des revendications précédentes, comportant au moins un premier dispositif (16) pour détecter des variations dans le temps des signaux de sortie des capteurs,

**caractérisé par** un deuxième dispositif (17) pour comparer et vérifier les variations quant à leur plausibilité qui est respectée par les dépendances des signaux de sortie des capteurs déterminées par le processus, lorsque les variations des signaux de sortie des capteurs sont toutes différentes de zéro ou toutes égales à zéro, ainsi que pour générer un message de défaut en l'absence de plausibilité.

7. Dispositif selon la revendication 6,
**caractérisé en ce que** le premier dispositif (16) comporte un différenciateur associé à chaque capteur pour la dérivée dans le temps des signaux de sortie des capteurs, ainsi qu'un intégrateur pour l'intégration de la valeur absolue de la dérivée dans le temps des signaux de sortie.

8. Dispositif selon la revendication 6 ou 7,
**caractérisé en ce qu'**à chaque capteur (10, 11, 12) est associé un passe-bas (13, 14, 15), au moyen duquel les signaux de sortie des capteurs sont filtrés puis acheminés vers le premier dispositif (16).

9. Système ESP pour véhicule qui est commandé par une unité à microprocesseur,
**caractérisé par** un dispositif selon l'une des revendications 6 à 8, le processus étant le programme électronique de stabilité de conduite et les capteurs un capteur d'embardée, un capteur d'accélération transversale et un capteur d'angle de braquage, et le premier ainsi que le deuxième dispositif étant installés par un sous-programme dans l'unité à microprocesseur.

$$S_{H10} \quad S_{L10} \quad S_{L12}$$

. . . .

$$\Delta y_{10}$$

$$\Delta y_{11}$$

$$\Delta y_{12}$$

10

13

11

14

12

15

16

17

FM

Fig. 1

Fig. 2

a )

b )

c )

d )

# Fig. 3